(19) Europäisches Patentamt
European Patent Office
Office européen des brevets

(11) **EP 2 132 754 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
*H01F 7/16* (2006.01)     *G01F 11/16* (2006.01)
*H01F 7/08* (2006.01)     *B67D 1/00* (2006.01)

(21) Anmeldenummer: **08734366.1**

(22) Anmeldetag: **12.03.2008**

(86) Internationale Anmeldenummer:
**PCT/DE2008/000426**

(87) Internationale Veröffentlichungsnummer:
**WO 2008/110156 (18.09.2008 Gazette 2008/38)**

(54) **DOSIERMAGNET**

METERING MAGNET

AIMANT UTILISE DANS UN SYSTEME DOSEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.03.2007 DE 102007012943**

(43) Veröffentlichungstag der Anmeldung:
**16.12.2009 Patentblatt 2009/51**

(73) Patentinhaber: **Johnson Electric Germany GmbH & Co. KG**
**01257 Dresden (DE)**

(72) Erfinder:
• **ROSCHKE, Thomas**
**01477 Arnsdorf (DE)**
• **MALAGUERRA, Luca**
**01237 Dresden (DE)**

(74) Vertreter: **Hecker, Roland Christoph et al**
**Sperling, Fischer & Heyner**
**Patentanwälte**
**Tolkewitzer Straße 22**
**01277 Dresden (DE)**

(56) Entgegenhaltungen:
**DE-A1- 4 438 158     FR-A- 2 489 785**
**FR-A- 2 889 621**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft einen Dosiermagneten, der zumindest einen in einem Gehäuse platzierten und eine Erregerspule aufweisenden Grundkörper mit einer Ankerbohrung sowie eine in der Ankerbohrung angeordnete Dosierpumpe mit einem in Richtung der Längsachse der Ankerbohrung arbeitenden Anker umfasst, wobei in der Ankerbohrung zwei durch einen unmagnetischen Abschnitt axial voneinander beabstandete magnetisch leitfähige Buchsen angeordnet sind.

Derartige Dosiermagneten werden vorzugsweise in Getränkeautomaten eingesetzt, um ein Konzentrat, beispielsweise ein Fruchtsaftkonzentrat, Kaffeekonzentrat oder Suppenkonzentrat, in exakt dosierter Menge dem Wasser zuzugeben. Typischerweise wird das Konzentrat aus einem großen Vorratsbehälter, z. B. einem 2l-Tetrapack, in das Trinkgefäß dosiert und mit der entsprechenden Wassermenge vermischt.

Aus dem Stand der Technik sind hierzu Dosiermagneten nach dem Oberbegriff des Anspruchs 1 vorbekannt, die einen eine Erregerspule aufweisenden Grundkörper aufweisen, in dessen Ankerbohrung eine Dosierpumpe mit einem in Richtung der Längsachse der Ankerbohrung arbeitenden Anker platziert ist. Der Grundkörper ist im Bereich der Ankerbohrung durch einen unmagnetischen Abschnitt, üblicherweise durch einen Kunststoffring, unterbrochen, wobei der magnetische Anker diesen unmagnetischen Abschnitt teilweise überbrückt und zwischen zwei durch innerhalb der Ankerbohrung platzierte Buchsen definierten Endlagen positioniert wird. Der Einlass der Dosierpumpe ist dabei mit dem Konzentratbehälter gekoppelt und der Auslass der Dosierpumpe ist in Richtung des Trinkgefäßes geöffnet. Der üblicherweise von einem zweiteiligen zylinderförmigen Gehäuse umhüllte Dosiermagnet weist einen topfartigen Teil und einen mit dem topfartigen Teil verpressten Deckel auf. Der besondere Nachteil dieser Dosiermagnete besteht darin, dass die dem Deckel des Gehäuses abgewandte Stirnseite der Ankerbohrung mechanisch nachgearbeitet werden muss, um eine exakte Position der Dosierpumpe - und damit des Ankers - sicherzustellen. Jedoch kann mit diesem Fertigungsschritt nur die Ankerposition, jedoch nicht die Länge des unmagnetischen Abschnitts justiert werden. Durch die Verstemmung des Deckels mit dem Gehäusetopf und durch den Einfluss der Elastizität des Kunststoffrings entsteht eine große Toleranzkette, welche die Dosiergenauigkeit des Dosiermagneten entscheidend verringert. Die Dosierstreubreite derartig gefertigter Dosiermagnete ist gegenüber der geforderten Dosiergenauigkeit zu groß, was zwangsläufig mit einer hohen Ausschussquote einhergeht.

Die Aufgabe der Erfindung besteht nunmehr darin, einen Dosiermagneten bereitzustellen, der eine höhere Dosiergenauigkeit aufweist und dessen Dosierstreubreite gering ist. Eine weitere Aufgabe der Erfindung besteht darin, ein Verfahren zur Fertigung eines Dosiermagneten vorzuschlagen, mit dem die mechanische Nacharbeit vermieden wird sowie eine chargenübergreifende konstante Dosiermenge und damit eine Verringerung der Ausschussquote erzielt wird.

Nach der Konzeption der Erfindung umfasst der Dosiermagnet zumindest einen in einem Gehäuse platzierten und eine Erregerspule aufweisenden Grundkörper mit einer Ankerbohrung sowie eine in der Ankerbohrung angeordnete Dosierpumpe mit einem in Richtung der Längsachse der Ankerbohrung arbeitenden Anker. In der Ankerbohrung sind zwei durch einen unmagnetischen Abschnitt axial voneinander beabstandete magnetisch leitfähige Buchsen angeordnet. Erfindungsgemäß ist außerdem ein in der Ankerbohrung platziertes Koppelelement vorgesehen, auf dem oder in dem die beiden axial voneinander beabstandeten Buchsen fest angeordnet und mittels des geometrisch definierten unmagnetischen Abschnitts zueinander ausgerichtet sind.

Durch die Lagefixierung der beiden Buchsen auf dem Koppelelement kann der Eisenkreis mit dem geometrisch definierten unmagnetischen Abschnitt, insbesondere die Länge des Abschnitts, exakt eingestellt und dauerhaft eingehalten werden. Genauso wird die Induktivität von der Ruheposition des Ankers beeinflusst, die damit ebenfalls genau eingestellt werden kann.

Bei einer ersten Ausgestaltung der Erfindung ist das Koppelelement als Hülse ausgebildet, auf dem die beiden axial voneinander beabstandeten Buchsen unter Ausbildung eines definierten Luftspalts fest angeordnet sind. Die Buchsen können dabei sowohl auf der Innenseite der unmagnetischen Hülse als auch auf der Außenseite der unmagnetischen Hülse angeordnet sein. Durch eine vorzugsweise werkseitige Verpressung der beiden Buchsen auf der Hülse sind diese unter Ausbildung eines Luftspalts in ihrer Lage zueinander fixiert. Durch den Aufbau des magnetischen Innenteils des Dosiermagneten mit Hilfe einer dünnen unmagnetischen Hülse kann gegenüber dem Stand der Technik der zwischen den beiden Buchsen erforderlich Luftspalt bei der Montage durch Pressung erstmals exakt justiert werden, wodurch sich die Toleranzkette bei der Fertigung erheblich verkürzt. Die beiden Buchsen können dabei sowohl auf der Innenseite - Kraftverlust durch Erhöhung des radialen Luftspaltes zwischen Joch und Anker - als auch auf der Außenseite der unmagnetischen Hülse - geringfügige Einschränkung des Kupfervolumens - angeordnet sein. Vorzugsweise werden die Buchsen jedoch auf der Außenseite der Hülse fest verpresst; wenn eine gute geschlossene Gleitfläche für den Anker erforderlich ist, dann auch auf der Innenseite.

Das Verfahren zum Einpressen der Hülse in die Ankerbohrung wird zum Zwecke einer hohen Prozesssicherheit hinsichtlich des Krafteintrags unter Verwendung einer geeigneten Vorrichtung gesteuert und ständig überwacht. Somit wird der Sitz der Dosierpumpe beim Einpressen der Teile ohne Nacharbeit in der erforderlichen Genauigkeit erreicht.

Mit dem neuen Aufbau des Dosiermagneten kann gleichzeitig auf Klebstoff zur Sicherung der elektrischen Schutzklasse IP54 verzichtet werden.

Die zur Lagefixierung der beiden Buchsen eingesetzte unmagnetische Hülse besteht aus einem unmagnetischen Metall oder einem Kunststoff. Kunststoffe weisen der Vorteil auf, dass diese kostengünstig zu fertigen sind und mittels eines Spritzverfahrens nahezu beliebig geformt werden können. Bei einer als Kunststoffspritzteil ausgebildeten und im Querschnitt zylinderförmigen Hülse ist erfindungsgemäß zur Ausbildung eines unmagnetischen Abschnitts ein Anschlag vorgesehen, an dem die als obere Buchse und die als untere Buchse ausgebildeten Buchsen stirnseitig anschlagen. Im Längsschnitt ist diese Hülse T-förmig oder Doppel-T-förmig ausgebildet, wobei der Basisschenkel des "T" als Anschlag definiert ist.

Die Dosiergenauigkeit des Dosiermagneten wird im Wesentlichen von der Streuung der Magnetkräfte beeinflusst, da die Steuerimpulse mit hoher Genauigkeit angelegt werden können.

Die Magnetkraft eines Elektromagneten kann wie folgt beschrieben werden:

$$F_{mag} = \frac{i^2}{2} \cdot \frac{dL}{dx}$$

Das heißt Strom und Induktivität bestimmen die erzeugte Magnetkraft. Der Strom im stationären Fall wird vom ohmschen Widerstand des Elektromagneten bestimmt. Das heißt, der Widerstand R des Elektromagneten muss eng toleriert werden, um eine hohe Dosiergenauigkeit zu erreichen.

Die Induktivität ergibt sich bei Vernachlässigung der Reluktanz des Eisenrückschlusses aus:

$$L = \frac{w^2}{R_{mag}} \approx \frac{w^2 \cdot A_{gap}}{x_{gap} \cdot \mu_0}$$

Bei einer vorteilhaften Weiterbildung der Erfindung wird jedoch die Eisenreluktanz wegen der Frequenzabhängigkeit der Steuerimpulse noch mit einbezogen.

Daraus folgt, dass die Windungszahl der Erregerspule exakt eingehalten werden muss. Die Wicklungen der Erregerspule sind deshalb orthozyklisch auf dem Spulenkörper angeordnet sind, wobei die Länge des Kupferdrahtes und die Induktivität der Kupferwicklung ohne Eisen mit einer geringen Streuung gefertigt werden kann.

Bei einer weiteren bevorzugten Ausgestaltung der Erfindung ist die obere Buchse mit dem Gehäusetopf und die untere Buchse mit dem Deckel des Gehäuses derart fest verpresst, dass sich im zusammengefügten Zustand des Gehäuses zwischen den beiden axial voneinander beabstandeten Buchsen ein geometrisch definierter und unmagnetisch Abschnitt ausbildet. Trotz des Verzichts auf das Koppelelement kann der vorzugsweise als Luftspalt ausgebildete unmagnetische Abschnitt in seiner Länge, vorzugsweise im *µm-Bereich,* exakt justiert werden, da die Krafteinleitung zum Verpressen der beiden Gehäuseteile gesteuert und überwacht wird.

Das Verfahren zur Fertigung eines Dosiermagneten erfolgt unter Verwendung der vorgenannten Verrichtungsmerkmale, wobei zur Erzielung einer chargenübergreifenden konstanten Dosiermenge der Dosiermagneten die Windungszahl der Erregerspule in Abhängigkeit der vor Fertigung des Dosiermagneten erfassten Permeabilität des ferromagnetischen Grundkörpers ermittelt und entsprechend aufgebracht wird.

Des Weiteren wird die Länge des definierten Ringspaltes zur Erzielung einer chargenübergreifenden konstanten Dosiermenge der Dosiermagneten eingesetzt.

Die signifikanten Vorteile und Merkmale der Erfindung gegenüber dem Stand der Technik sind im Wesentlichen:

- Verkürzung der Toleranzkette bei der Fertigung durch Verpressen der Buchsen auf dem Koppelelement, respektive auf der Hülse oder im Kunststoffspritzteil, führt zu einer hohen Dosiergenauigkeit,
- durch die Lagefixierung der beiden Buchsen auf dem Koppelelement kann der geometrisch definierten unmagnetischen Abschnitt, insbesondere die Länge des Abschnitts, exakt eingestellt und dauerhaft eingehalten werden,
- Verkürzung der Toleranzkette bei der Fertigung durch Verpressen der Buchsen im Deckel und im topfartigen Teil des Gehäuses,
- orthozyklische Anordnung der Windungen der Erregerspule auf dem Spulenkörper führt zu einer geringen Streuung der Induktivität,
- Sitz des Dosierpumpe in der Ankerbohrung wird beim Einpressen der Teile ohne Nacharbeit in der erforderlichen Genauigkeit erzielt und
- Verzicht auf Klebstoff zur Sicherung der erforderlichen Schutzklasse IP54.

Die Ziele und Vorteile dieser Erfindung sind nach sorgfältigem Studium der nachfolgenden ausführlichen Beschreibung der hier bevorzugten, nicht einschränkenden Beispielausgestaltung der Erfindung mit den zugehörigen Zeichnungen besser zu verstehen und zu bewerten, von denen zeigen:

Fig. 1:     Querschnitt eines Dosiermagneten aus dem Stand der Technik,

Fig. 2:     Detaildarstellung eines Dosiermagneten aus dem Stand der Technik,

Fig. 3:     Querschnitt eines Dosiermagneten mit Koppelelement, bei dem die Buchsen auf der Innenseite des Koppelelements angeordnet sind,

Fig. 4:     Querschnitt eines Dosiermagneten mit Koppelelement, bei dem die Buchsen auf der Außenseite des Koppelelements angeordnet sind,

Fig. 5:     Detaildarstellung des Koppelelements in Zusammenwirken mit der Dosierpumpe im Querschnitt,

Fig. 6:     Detaildarstellung eines als Kunststoffspritzteil ausgebildeten Koppelelements in T-Form,

Fig. 7:     Detaildarstellung eines als Kunststoffspritzteil ausgebildeten Koppelelements in Doppel-T-Form,

Fig. 8:     Detaildarstellung eines Dosiermagneten ohne Koppelelement mit in den zugehörigen Gehäuseteilen festverpressten Buchsen,

Fig. 9:     Diagrammdarstellung der Dosiergenauigkeit in Abhängigkeit des Luftspalts zwischen den Buchsen und

Fig. 10:    Diagrammdarstellung der Dosierzeit in Abhängigkeit des Luftspalts zwischen den Buchsen.

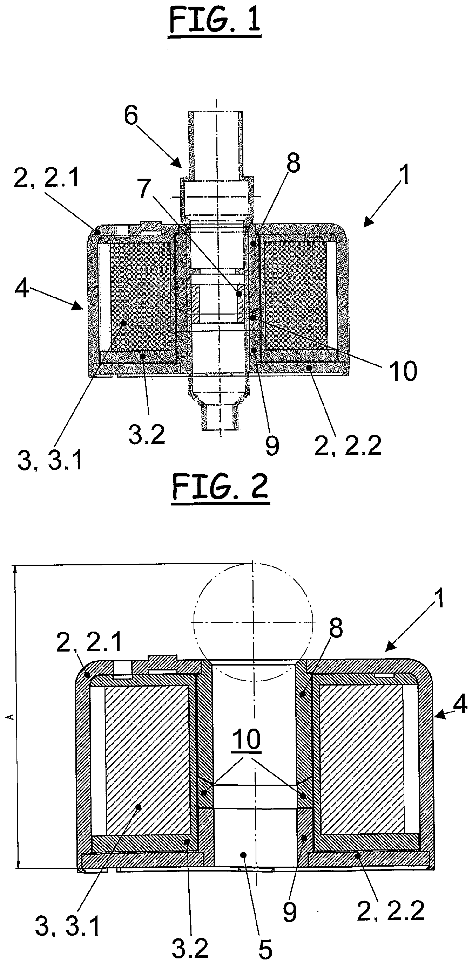

Die Figuren 1 und 2 zeigen einen Querschnitt eines Dosiermagneten 1 aus dem Stand der Technik. Der Dosiermagnet 1 besteht im Wesentlichen aus einem in einem Gehäuse 2 platzierten und eine Erregerspule 3 aufweisenden Grundkörper 4, welcher eine zentrische Ankerbohrung 5 aufweist. Die Erregerspule 3 besteht naturgemäß aus einem Spulenkörper 3.2, auf welchem die Wicklungen 3.1 angeordnet sind. Innerhalb der Ankerbohrung 5 ist eine Dosierpumpe 6 mit einem in Richtung der Längsachse der Ankerbohrung 5 arbeitenden Anker 7 angeordnet. In der Ankerbohrung 5 sind ferner zwei durch einen als Kunststoffring ausgebildeten unmagnetischen Abschnitt 10 axial voneinander beabstandete magnetisch leitfähige Buchsen 8, 9 platziert, die an der oberen und unteren Stirnseite der Ankerbohrung 5 bündig abschließen. Die obere Buchse 8, der elastomere Ring 10 sowie die untere Buchse 9 werden durch das Verstemmen des Deckels 2.2 auf dem Gehäusetopf 2.1 des Gehäuses 2 zusammen gepresst. Zusätzlich ist ein nicht näher bezeichnetes Federelement und der Deckel 2.2 des Gehäuses 2 mit Klebstoff abgedichtet. Die Länge bzw. Höhe des zwischen den beiden Buchsen 8, 9 platzierten elastomeren Rings 10 hängt deshalb von der Verstemmungskraft und von der Elastizität des elastomeren Rings 10 ab. Da die Position des Ankers 7 entscheidend für die Dosiergenauigkeit des Dosiermagneten 1 ist, muss das Maß A, also der Sitz der Dosierpumpe 6, am komplett montierten Dosiermagneten 1 nachgedreht werden. Die Bestromung der Erregerspule 3 des Dosiermagneten 1 bewirkt eine Bewegung des Ankers 7 nach unten. Das Abschalten des Stromes hingegen führt unter Verwendung des Federelements zu einer Bewegung des Ankers 7 nach oben in Richtung des nichtdargestellten Konzentratbehälters. Durch die Hin- und Herbewegung des Ankers 7 und des nicht näher beschriebenen Ventilsystems der Dosierpumpe 1 wird ein vorzugsweise aus Silicon gefertigtes Reservoir mit Flüssigkeit gefüllt und entleert. Die Kraft und die Geschwindigkeit der Bewegung des Ankers 7 spielen eine wichtige Rolle für die Dosiergenauigkeit.

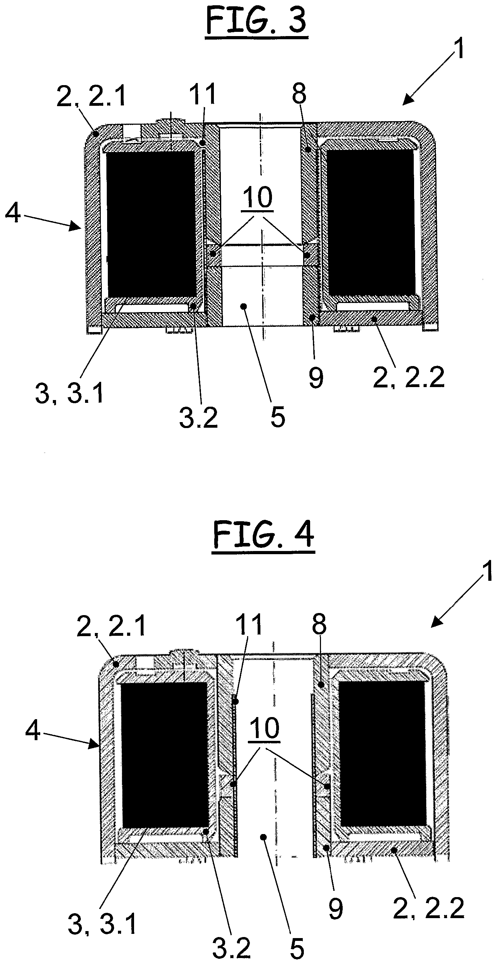

Die Figuren 3 und 4 illustrieren einen erfindungsgemäßen Dosiermagneten 1 zur hochpräzisen Dosierung von Getränkekonzentraten, welcher einen in einem Gehäuse 2 platzierten und eine Erregerspule 3 aufweisenden Grundkörper 4 mit einer Ankerbohrung 5 sowie eine in der Ankerbohrung 5 angeordnete Dosierpumpe 6 mit einem in Richtung der Längsachse der Ankerbohrung 5 arbeitenden Anker 7 aufweist. Die Erregerspule 3 besteht naturgemäß aus einem Spulenkörper 3.2, auf welchem die Wicklungen 3.1 orthozyklisch angeordnet sind. In der Ankerbohrung 5 ist ein Koppelement 11 vorgesehen, welches sich entlang der Ankerbohrung 5 erstreckt. Das Koppelelement 11 ist hierbei als Edelstahlhülse ausgebildet, auf dem die beiden axial voneinander beabstandeten und magnetisch leitfähige Buchsen 8, 9 unter Ausbildung eines definierten Luftspalts 10 fest angeordnet sind. Gemäß Fig. 3 sind die beiden Buchsen 8, 9 auf der Innenseite der unmagnetischen Hülse angeordnet und gemäß Fig. 4 auf der Außenseite der unmagnetischen Hülse platziert. Das als Edelstahlhülse ausgebildete Koppelelement 11 wird in dem aus einem Deckel 2.2 und einem Topf 2.1 aufgebauten Gehäuse 2 verpresst und dort entsprechend der gewünschten Ankerposition ausgerichtet.

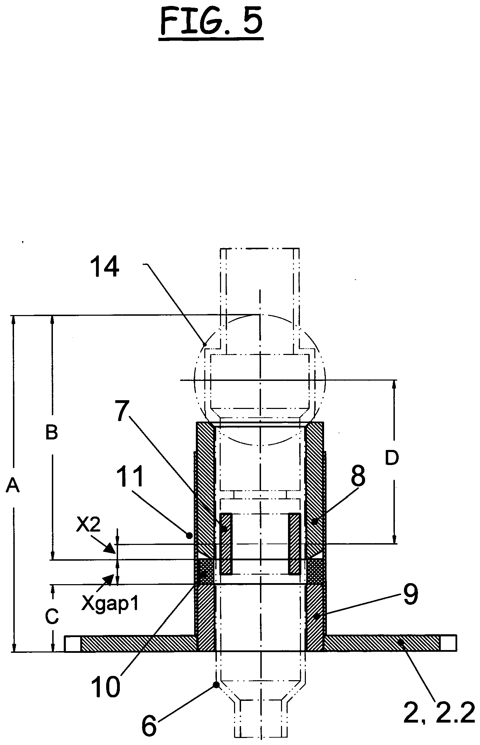

Die Fig. 5 zeigt eine Detaildarstellung des Koppelelements 11 in Zusammenwirken mit der nur angedeuteten Dosierpumpe 6 im Querschnitt. In dieser Darstellung sind die beiden Buchsen 8, 9 auf der Außenseite der unmagnetischen Hülse gemäß Fig. 4 angeordnet. Da die Toleranzkette vom Maß Xgap1 bei der erfindungsgemäßen Lösung sehr kurz und unabhängig von der Verstemmung des Deckels 2.2 mit dem Gehäusetopf 2.1 ist, können die Toleranzen des Luftspaltes Xgap1 sehr klein und zusätzlich die Toleranzen der Maße A, B und C sehr genau eingehalten werden. Die erforderliche Genauigkeit des Maßes A wird dabei beim Einpressen erreicht. Die erforderlichen Genauigkeiten der Maße B und C werden hingegen beim Drehen erreicht. Da die Toleranzkette von der Position des Ankers X2 in Verhältnis zu den Buchsen 8, 9 sehr kurz und unabhängig von der Verstemmung ist, kann ebenso die Toleranz des Maßes X2 sehr klein eingehalten werden. In der Toleranzkette des Maßes X2 wird außerdem das Maß D berücksichtigt, welches jedoch von der Dosierpumpe 6 vorgegeben ist. Mit

dem Bezugzeichen 14 ist eine Messkugel angedeutet, die als Prüfmittel zur Bestimmung der Neigung der Fasen des stirnseitigen Endes der Ankerbohrung 5 eingesetzt wird.

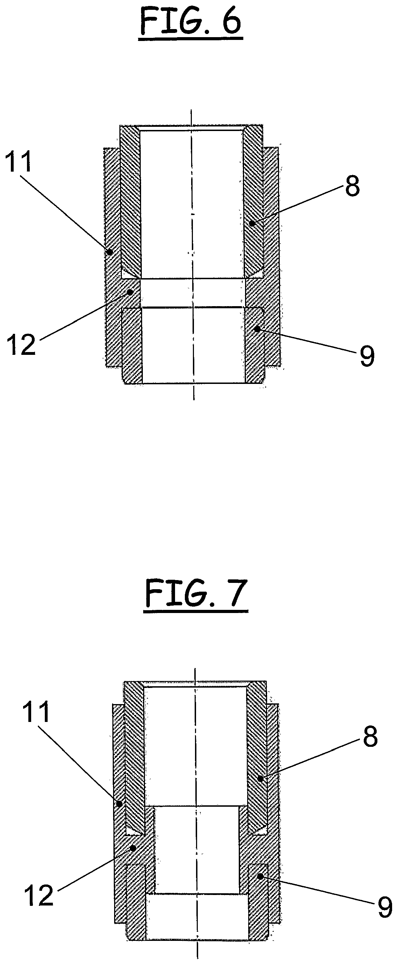

Die Figuren 6 und 7 zeigen ein erfindungsgemäßes Koppelelement 11, welches aus einem Kunststoffspritzteil gefertigt ist. Während die Fig. 6 ein Koppelelement 11 in T-Form zeigt, ist in der Fig. 7 ein Koppelelement 11 in H-Form illustriert. Die dargestellten Koppelelemente 11 weisen jeweils einen - in der Darstellung horizontalen - Basisschenkel auf, der als Anschlag 12 definiert ist. An diesem Anschlag 12 schlagen die obere Buche 8 und die untere Buchse 9 stirnseitig an, so dass die Buchsen 8, 9 in ihrem axialen Abstand zueinander exakt ausgerichtet sind. Die beiden Buchsen 8, 9 und das Koppelelement 11 weisen eine gemeinsame Achse auf, die als Strich-Punkt-Linie dargestellt ist.

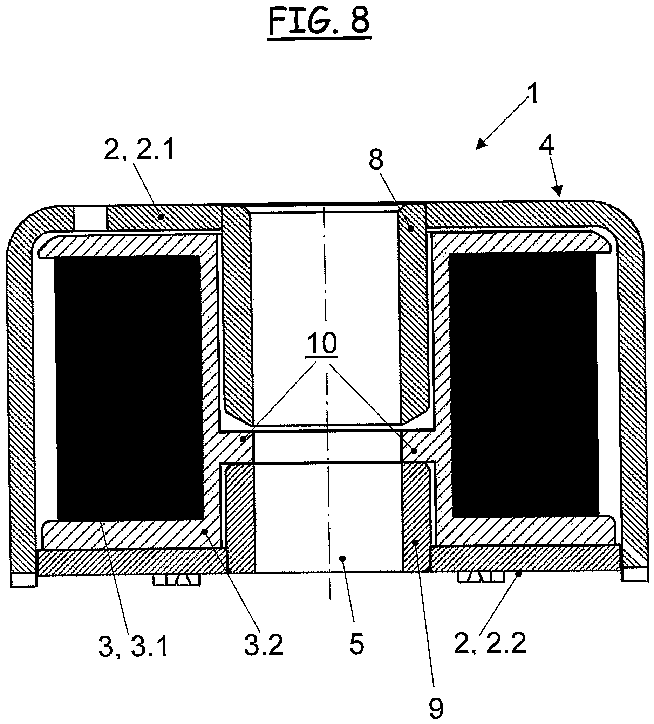

Die Fig. 8 zeigt eine weitere bevorzugte Ausgestaltung, bei der unter Verzicht auf ein Koppelelement 11 die beiden Buchsen 8, 9 in der Ankerbohrung 5 angeordnet sind. Die obere magnetisch leitfähige Buchse 8 ist dabei mit dem Topf 2.1 des Gehäuses 2 und die untere Buchse 9 mit dem Deckel 2.2 des Gehäuses 2 fest verpresst. Durch das Zusammenfügen, respektive dem Verpressen, des Deckels 2.2 mit dem Topf 2.1 des Gehäuses 2 entsteht zwischen den Stirnseiten der beiden sich gegenüberstehenden Buchsen 8, 9 und dem in die Ankerbohrung 5 hineinragenden Teil des Spulenkörpers 4 ein definierter Luftspalt, der bei der Bestromung des Dosiermagneten 1 von dem in der Fig. 5 dargestellten Anker 7 überbrückt wird. Der Unterschied gegenüber dem Stand der Technik besteht bei dieser Ausgestaltung der Erfindung darin, dass die Toleranzkette wesentlich verkürzt werden konnte und zusätzlich der unmagnetische Abschnitt, der ein Teil des Spulenkörpers 4 ist, zwischen den beiden Buchsen 8, 9 geometrisch exakt bestimmt ist.

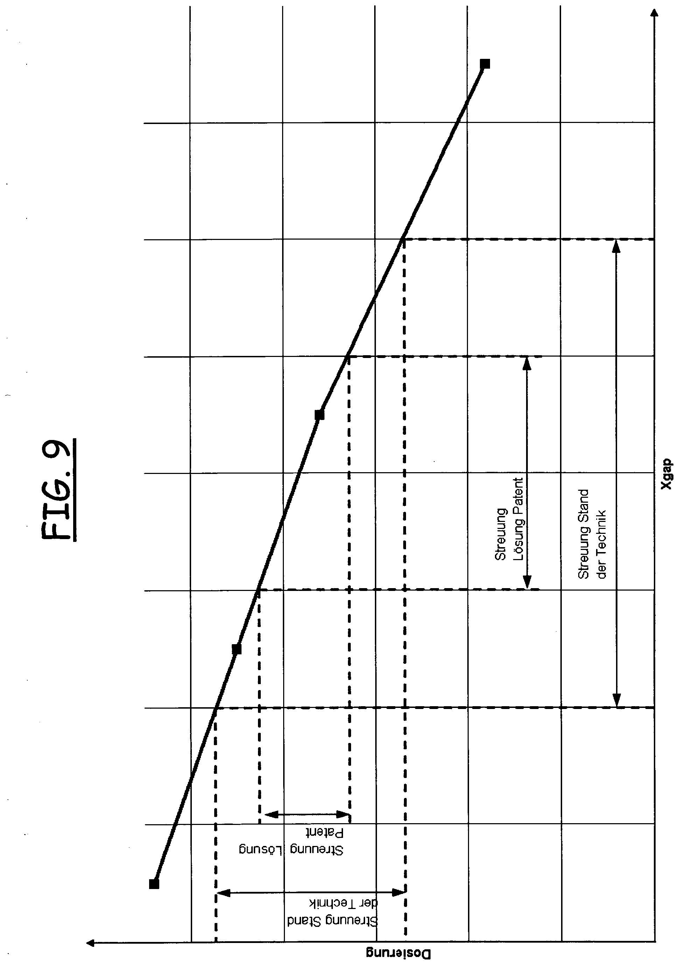

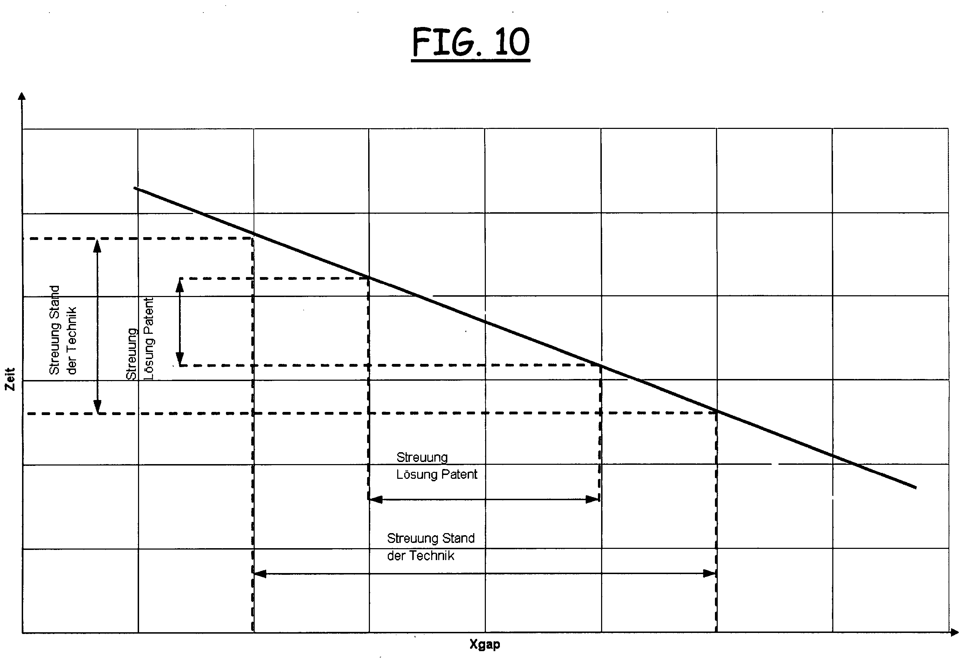

Die Figuren 9 und 10 illustrieren die Dosiergenauigkeit und die Dosierzeit in Abhängigkeit des unmagnetischen Abschnitts 10, respektive des Luftspalts zwischen den beiden in den Figuren 3 und 4 dargestellten Buchsen 8, 9. Es konnte durch Versuche nachgewiesen werden, dass sich die Induktivität des Eisenkreises des Grundkörpers 4 von den Luftspaltmaßen, also der Länge des unmagnetischen Abschnitts 10, abhängt. Gemäß Fig. 9 führen kleine Toleranzen im Luftspaltmaß zwischen den sich gegenüberliegenden Buchsen 8, 9 zu einer kleineren Dosierstreuung. Mit der erfindungsgemäßen Verkleinerung des Toleranzbereichs des Luftspaltmaßes geht auch zu einer verringerten Streuung in der Dosierzeit, wie dies Fig. 10 illustriert.

## LISTE DER BEZUGSZEICHEN

1 Dosiermagnet
2 Gehäuse
2.1 Gehäusetopf
2.2 Gehäusedeckel
3 Erregerspule
3.1 Windungen der Erregerspule
3.2 Spulenkörper
4 Grundkörper
5 Ankerbohrung
6 Dosierpumpe
7 Anker
8 Buchse, oben
9 Buchse, unten
10 unmagnetischer Abschnitt
11 Koppelelement
12 Anschlag
13 Klebstoff
14 Messkugel nach DIN

## Patentansprüche

1. Dosiermagnet (1), zumindest umfassend einen in einem Gehäuse (2) platzierten und eine Erregerspule (3) aufweisenden Grundkörper (4) mit einer Ankerbohrung (5) sowie eine in der Ankerbohrung (5) angeordnete Dosierpumpe (6) mit einem in Richtung der Längsachse der Ankerbohrung (5) arbeitenden Anker (7), wobei in der Ankerbohrung (5) zwei axial voneinander beabstandete magnetisch leitfähige Buchsen (8, 9) angeordnet sind, **dadurch gekennzeichnet, dass** außerdem ein in der Ankerbohrung (5) platziertes Koppelelement (11) vorgesehen ist, auf dem oder in dem die beiden magnetisch leitfähigen Buchsen (8, 9) fest angeordnet sind, wobei zwischen den beiden Buchsen (8, 9) ein unmagnetischer Abschnitt (10) mit einer gewünschten Länge in der Gestalt eines elastomern Rings platziert ist.

2. Dosiermagnet (1) nach Anspruch 1, **dadurch gekennzeichnet, dass** das Koppelelement (11) als Hülse ausgebildet ist.

3. Dosiermagnet (1) nach Anspruch 2, **dadurch gekennzeichnet, dass** die beiden Buchsen (8, 9) auf der Innenseite der unmagnetischen Hülse angeordnet sind.

4. Dosiermagnet (1) nach Anspruch 2, **dadurch gekennzeichnet, dass** die beiden Buchsen (8, 9) auf der Außenseite der unmagnetischen Hülse angeordnet sind.

5. Dosiermagnet (1) nach einem der Ansprüche 2 bis 4, **dadurch gekennzeichnet, dass** die beiden Buchsen (8, 9) auf der Hülse werkseitig fest verpresst angeordnet sind.

6. Dosiermagnet (1) nach einem der Ansprüche 2 bis 5, **dadurch gekennzeichnet, dass** die unmagnetische Hülse aus einem unmagnetischen Metall oder einem Kunststoff besteht.

7. Dosiermagnet (1) nach einem der Ansprüche 1 bis 6, **dadurch gekennzeichnet, dass** die obere Buchse (9) mit dem Gehäusetopf (2.1) und die untere Buchse (8) mit dem Deckel (2) des Gehäuses (2) fest verpresst sind, wobei sich im zusammengefügten Zustand des Gehäuses (2) zwischen den beiden axial voneinander beabstandeten Buchsen (8, 9) ein geometrisch definierter und unmagnetischer Abschnitt (10) mit gewünschter Länge ausbildet.

8. Dosiermagnet (1) nach einem der Ansprüche 1 bis 7, **dadurch gekennzeichnet, dass** die Windungen (3.1) der Erregerspule (3) orthozyklisch auf dem Spulenkörper (3.2) angeordnet sind.

9. Dosiermagnet (1) nach einem der Ansprüche 1 bis 8, **dadurch gekennzeichnet, dass** das zylinderförmig ausgebildete Gehäuse (2) zweiteilig mit einem topfartigen Teil (2.1) und einem mit dem topfartigen Teil verpressten Deckel (2.2) aufgebaut ist.

10. Verfahren zur Fertigung eines Dosiermagneten (1) mit den Merkmalen des Anspruchs 1 oder 8, **dadurch gekennzeichnet, dass** zur Erzielung einer chargenübergreifenden konstanten Dosiermenge der Dosiermagneten (1) die Anzahl der Windungen (3.1) der Erregerspule (3) in Abhängigkeit der vor Fertigung des Dosiermagneten (1) erfassten Permeabilität des ferromagnetischen Grundkörpers (4) ermittelt und entsprechend aufgebracht wird.


**Claims**

1. A metering solenoid (1), which comprises at least one main body (4) placed in a housing (2) and having an exciter coil (3), and further comprises an armature bore (5) and a metering pump (6) disposed in the armature bore (5), said metering pump having an armature (7) operating in the direction of the longitudinal axis of the armature bore (5), whereby two magnetically conductive bushings (8, 9) are disposed in the armature bore (5), said conductive bushings being axially spaced from one another by a non-magnetic section (10), **characterised in that** a coupling element (11) is also provided in the armature bore (5), on or in said coupling element the two bushings (8, 9) are located axially at a distance from one another, whereby a non-magnetic portion (10) having a desired length in the form of an elastomeric ring is arranged between the two bushings (8, 9).

2. Metering solenoid (1) according to claim 1, **characterised in that** the coupling element (11) is designed as a sleeve.

3. Metering solenoid (1) according to claim 2, **characterised in that** the two bushings (8, 9) are arranged on the inner side of the non-magnetic sleeve.

4. Metering solenoid (1) according to claim 2, **characterised in that** the two bushings (8, 9) are arranged on the outer side of the non-magnetic sleeve.

5. Metering solenoid (1) according to one of claims 2 to 4, **characterised in that** the two bushings (8, 9) are arranged rigidly pressed on the working side of the sleeve

6. Metering solenoid (1) according to one of claims 2 to 5, **characterised in that** the non-magnetic sleeve comprises a non-magnetic metal or a synthetic material.

7. Metering solenoid (1) according to one of claims 1 to 6, **characterized in that** the upper bushing (9) is rigidly pressed with the housing pot (2.1) and the lower bushing (8) with the cover (2) of the housing (2), whereby a geometrically defined and non-magnetic section (10) of desired length is formed between the two axially spaced bushings (8, 9) in the closed state of the housing (2).

8. Metering solenoid (1) according to one of claims 1 to 7, **characterized in that** the coils (3.1) of the exciter coil (3) are arranged orthocyclically on the coil body (3.2).

9. Metering solenoid (1) according to one of claims 1 to 8, **characterized in that** the cylindrical housing (2) is constructed in two parts with a pot-like part (2.1) and a cover (2.2) pressed together with the pot-like part.

10. Method for manufacturing a metering solenoid (1) according to one of claims 1 to 8, **characterized in that** the number of coils (3.1) of the exciter coil (3) is determined as a function of the permeability of the ferromagnetic main body (4) determined before manufacture of the metering solenoid (1) and applied accordingly.


**Revendications**

1. Aimant de dosage (1) comprenant au moins, placé dans un boîtier (2) et doté d'une bobine excitatrice (3), un corps principal (4) avec une ouverture d'ancrage (5) sur laquelle est disposée une pompe de dosage (6) avec un ancrage (7) travaillant dans l'axe longitudinal de l'ouverture d'ancrage (5), sur laquelle sont disposées deux bagues magnétoconductrices (8, 9) axialement distantes l'une de l'autre, **caractérisé, en outre, par** un élément de couplage (11) placé dans l'ouverture d'ancrage (5) et sur lequel ou dans lequel les deux bagues électroconductrices (8, 9) sont disposées de manière fixe, un écart amagnétique (10) d'une longueur souhaitée entre les deux bagues (8, 9) étant ménagé avec la disposition d'un anneau en élastomère.

2. Aimant de dosage (1) selon la revendication 1, **caractérisé en ce que** l'élément de couplage (11) forme une gaine.

3. Aimant de dosage (1) selon la revendication 2, **caractérisé en ce que** les deux bagues (8, 9) sont disposées à l'intérieur de la gaine amagnétique.

4. Aimant de dosage (1) selon la revendication 2, **caractérisé en ce que** les deux bagues (8, 9) sont disposées à l'extérieur de la gaine amagnétique.

5. Aimant de dosage (1) selon l'une des revendications 2 à 4, **caractérisé en ce que** les deux bagues (8, 9) sont disposées sur la gaine et assemblées par pressage en usine.

6. Aimant de dosage (1) selon l'un des revendications 2 à 5, **caractérisé en ce que** la gaine amagnétique est réalisée en métal amagnétique ou en plastique.

7. Aimant de dosage (1) selon l'une des revendications 1 à 6, **caractérisé en ce que** la bague supérieure (9) est assemblée par pressage avec le fond du boîtier (2.1) et **en ce que** la bague inférieure (8) est assemblée par pressage avec le couvercle (2) du boîtier (2), de sorte que le boîtier (2) inséré entre les deux bagues (8, 9) axialement distantes l'une de l'autre constitue un écart amagnétique et géométriquement défini (10) de longueur souhaitée.

8. Aimant de dosage (1) selon l'une des revendications 1 à 7, **caractérisé en ce que** les spires (3.1) de la bobine excitatrice (3) sont disposés de manière orthocyclique sur le corps de la bobine (3.2).

9. Aimant de dosage (1) selon l'une des revendications 1 à 8, **caractérisé en ce que** le boîtier cylindrique (2) se divise en deux avec une partie en forme de cuve (2.1) et un couvercle (2.2) assemblé par pressage avec la partie en forme de cuve.

10. Procédé de réalisation d'un aimant de dosage (1) avec les caractéristiques de la revendication 1 ou 8 **caractérisé en ce que**, pour atteindre une quantité de dosage constante quelle que soit la charge de l'aimant de dosage (1), le nombre de spires (3.1) de la bobine excitatrice (3) est déterminé et mis en oeuvre en fonction de la perméabilité du corps de base ferromagnétique (4) définie avant la réalisation de l'aimant de dosage (1).

## FIG. 1

## FIG. 2

## FIG. 3

## FIG. 4

# FIG. 5

# FIG. 6

# FIG. 7

# FIG. 8

# FIG. 9

## FIG. 10

Streuung
Lösung Patent

Streuung Stand
der Technik

Streuung Stand
der Technik

Streuung
Lösung Patent

Xgap

Zeit